# EUROPEAN PATENT APPLICATION

(11) **EP 2 653 326 A1**
(43) Date of publication of application: **23.10.2013**
(21) Application number: 12164531.1
(22) Date of filing: 18.04.2012
(51) Int. Cl.: B60G 15/06, B60G 13/00

(54) **Safety device designed to withhold the elastic support associated to the top end of the stem of a shock absorber in the corresponding seat of the body of a motor-vehicle**

(71) Applicant: Fiat Group Automobiles S.p.A., 10135 Torino (TO) (IT)
(72) Inventor: Vartolo, Giorgio, I-10135 Torino (IT); Messina, Alessandro, I-10135 Torino (IT)
(74) Representative: Notaro, Giancarlo

(57) **Abstract**

A safety device, designed to withhold an elastic support (4) associated to the top end of the stem (5) of a shock absorber in the corresponding seat of the body of a motor vehicle comprises a safety member (11) of the circular-plug or circular-cap type, which is positioned above the top end (82) of the outer reinforcement of the elastic support (4) projecting through a central opening (2a) of the dome-shaped portion (2) of the body of the motor vehicle. The safety member (11) is configured for engaging the aforesaid metal reinforcement and withholding it against the bottom surface of the dome-shaped portion (2) by a rotation about its axis. The safety member comprises a metal structure (110) provided with a coating made of elastomeric material (111) that covers the top wall of the metal structure (110) completely so as to close completely and in a fluid-tight way the cavity in which the stem of the shock absorber is set, also reducing the noise.

## Description

The present invention relates to safety devices designed to withhold the elastic support associated to the top end of the stem of a shock absorber in the corresponding seat of the body of a motor vehicle, of the type
in which said seat is in the form of a dome-shaped portion of sheet metal, with a top opening,
in which said elastic support comprises a body made of elastomeric material set between an inner reinforcement connected to said stem and an outer reinforcement resting against the bottom surface of said dome-shaped portion of the body,
in which said device comprises a cap-like safety member resting on the top surface of the dome-shaped portion of the body and designed to engage said outer reinforcement following upon a rotation about its axis so as to withhold said outer reinforcement against the bottom surface of said dome-shaped portion, and
in which said safety member comprises a metal structure provided with a coating made of elastomeric material, which, in the tightened condition of the safety member, is axially compressed between the top surface of the dome-shaped portion and the metal structure of the safety member.

A safety device having all the characteristics specified above is known from Figure 1 of the document No. DE 36 19 942 A1.

The object of the present invention is to provide a safety device of the type referred to above that will be simpler and more functional as compared to known devices.

With a view to achieving the above purpose, the subject of the invention is a safety device, which presents the characteristics that have already been referred to above and is moreover **characterized in that**:
- the metal structure of said safety member comprises a circumferential wall, radiused at the bottom with a bottom annular wall, having one or more teeth projecting radially inwards, and radiused at the top with a top wall having a central hole shaped to form an engagement slot for a wrench;
- said coating made of elastomeric material covers entirely the outer surface of said circumferential wall, of said top wall, and of said bottom annular wall and coats said engagement slot for the wrench, defining a blind bottom for said slot;
- said outer reinforcement has a top end projecting through said central opening above said dome-shaped portion and having an annular end edge projecting radially outwards;
- the aforesaid teeth of the safety member are designed to be received initially within corresponding notches of said annular end edge of said outer reinforcement and subsequently to engage within corresponding bottom seats of said annular end edge following upon a rotation of the safety member about its axis; and
- in said rotated condition of the safety member, said coating made of elastomeric material has at the bottom a first outer annular portion axially compressed between the bottom wall of the metal structure of the safety member and the top surface of the dome-shaped portion of the body, and a second, more internal, annular portion, received within the aforesaid top opening of the dome-shaped portion and pressed against a top wall of said outer reinforcement.

Thanks to the aforesaid characteristics, the device according to the invention affords numerous advantages. In the first place, the safety member according to the invention can be installed without entailing execution of operations of fixing or clipping and without entailing the use of cumbersome tools dedicated to closing with controlled torque, as in the case of more conventional solutions or as in the case of the solution known from the document No. US 6, 290, 218 B1, where a clamping ring is provided, constituted by two half-rings clipped together.

The safety member according to the invention can be installed with a simple and fast operation and guarantees safety against loosening of the connection in an optimal way.

A further important advantage of the device according to the invention lies in the fact that the coating made of elastomeric material with which the safety member is provided defines a completely closed top wall, which protects the stem of the shock absorber from dirt and from foreign bodies and moreover contributes to obtaining a reduction of the noise of the assembly.

A further important advantage deriving from the characteristics specified above lies in the considerable constructional simplification and in a consequent reduction of the cost for production and installation.

Further characteristics and advantages of the invention will emerge from the ensuing description with reference to the annexed drawings, which are provided purely by way of non-limiting example and in which:
- Figure 1 is an overall perspective view of the safety device according to the invention;
- Figure 2 is an exploded perspective view of the device of Figure 1;
- Figure 3 is a cross-sectional view of the device of Figures 1 and 2;
- Figure 4 is a perspective view of the safety member forming part of the device according to the invention, with the coating made of elastomeric material partially sectioned;
- Figure 5 is an overall perspective view of the top part of the elastic support associated to the stem of the shock absorber, mounted on which is the safety member illustrated in Figure 4;
- Figure 6 is a further partially sectioned perspective view of the safety member in the installed condition;
- Figure 7 is an exploded perspective view of the safety device of Figures 1-6;
- Figure 7A illustrates at an enlarged scale a detail of Figure 7;
- Figure 7B is a further perspective view of the device of Figure 7 in the condition in which the safety member is resting on the dome-shaped portion of the body, prior to its rotation for tightening;
- Figure 8A is a perspective view that shows the assembly of Figure 7B after rotation for tightening;
- Figure 8B is a further partially sectioned perspective view of the safety member in the tightened condition; and
- Figure 8C illustrates a detail of Figure 8B at an enlarged scale.

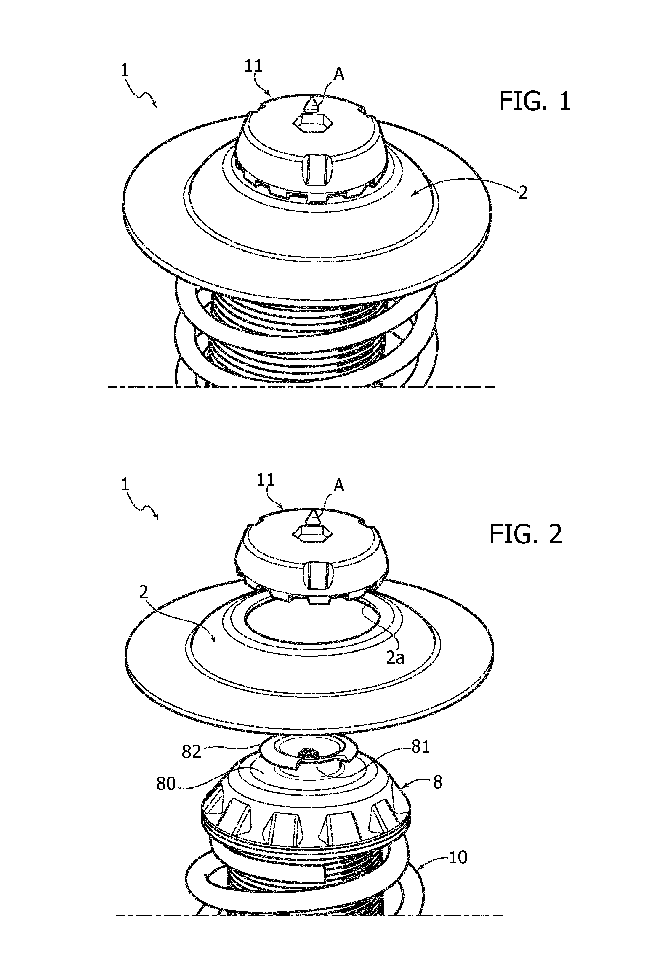

With initial reference to Figures 1-3, number 1 designates as a whole a safety device designed to withhold, against the bottom surface of a dome-shaped portion 2 of the body of a motor vehicle, the outer metal reinforcement 3 of an elastic support 4 that is associated to the top end of the stem 5 of a shock absorber.

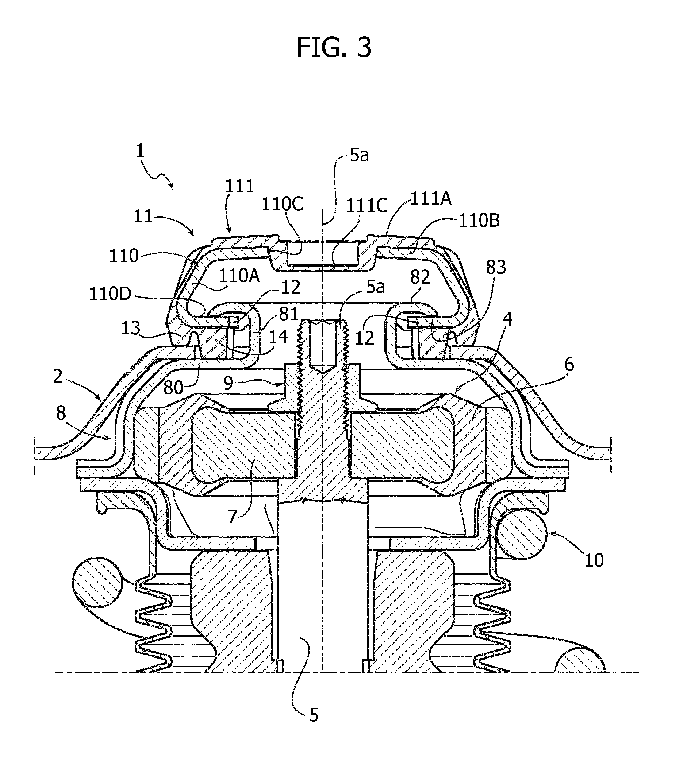

With reference in particular to Figure 3, according to a technique in itself known, the elastic support 4 comprises a body made of elastomeric material 6 set between an inner reinforcement 7 and an outer reinforcement 8. The inner reinforcement 7 is secured about a threaded shank 5a of the stem 5 by means of a tightening nut 9. The outer reinforcement 8 is bell-shaped and is pushed against the bottom surface of the dome-shaped portion 2 of the body by a helical spring 10 associated to the shock absorber.

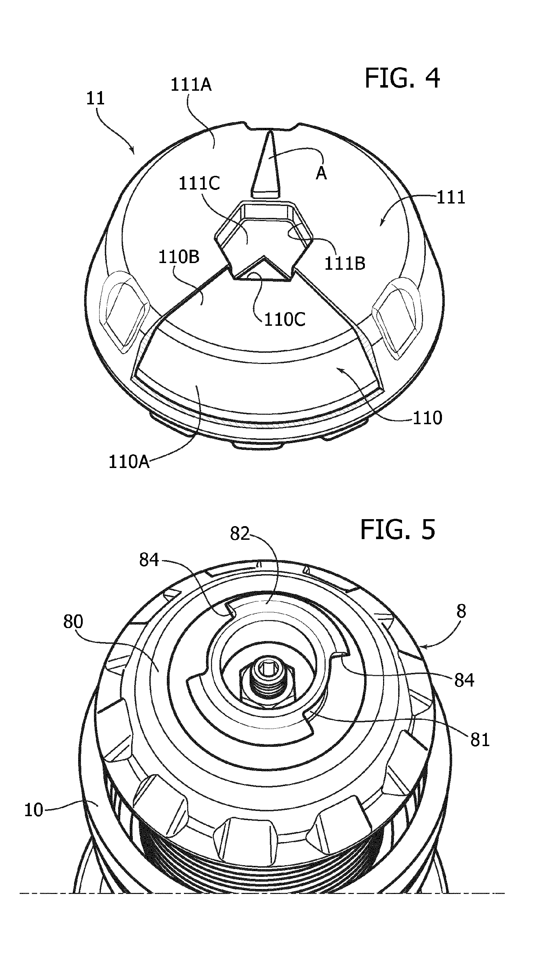

With reference now in particular to Figures 2 and 5, the outer reinforcement of the elastic support 8 has a top wall 80, from which there projects upwards a neck 81 that in the mounted condition of the device projects above the dome-shaped portion 2, through a central top opening 2a of the dome-shaped portion 2. The neck 81 terminates with an annular end edge 82, projecting radially outwards, defining an annular contrast surface 83 lying in a plane orthogonal to the axis 5a of the stem 5 and of the elastic support 4.

As may be seen in particular in Figure 5, the annular end edge 82 of the outer reinforcement 8 of the elastic support 4 has one or more notches 84. In the specific example illustrated, two notches 84 are provided that are diametrally opposite to one another, but it would for example be possible to envisage three or four notches, set at the same angular distance apart from one another.

In order to withhold the outer reinforcement 8 of the elastic support 4 against the bottom surface of the dome-shaped portion 2, the device according to the invention comprises a safety member 11 of the circular-plug or circular-cap type.

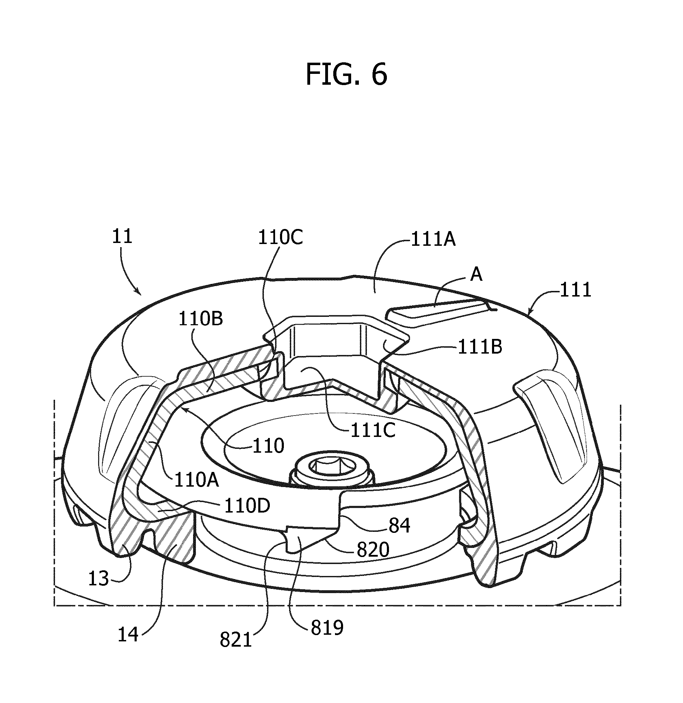

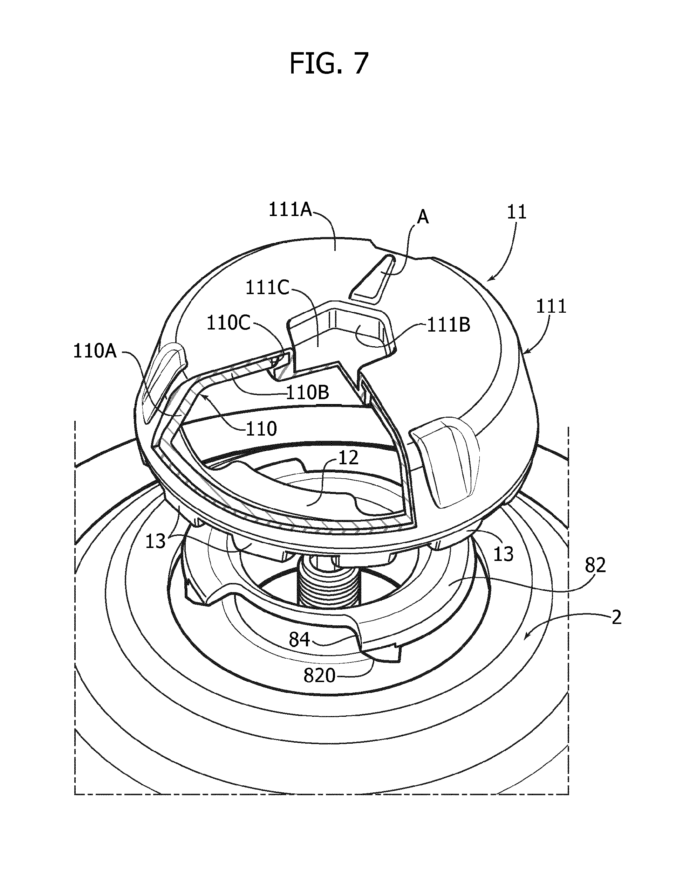

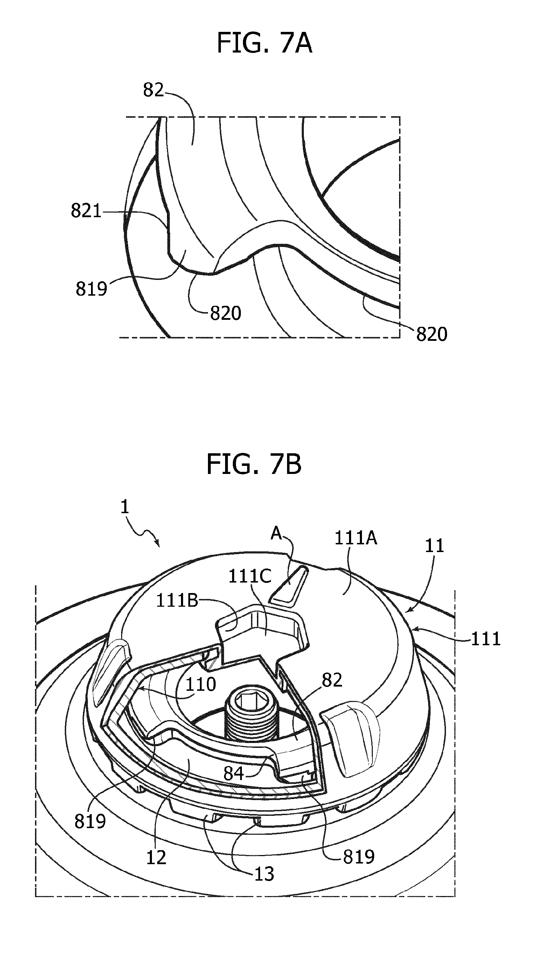

With reference now, in particular, to Figures 3, 4 and 6, the safety member 11 comprises a metal structure 110 provided with a coating made of elastomeric material 111. As may be seen in Figure 3, the metal structure 110 has a circumferential wall 110A, which in the example illustrated is shaped like a truncated cone. The circumferential wall 110A is radiused at the top with a top wall 110B having a hexagonal central opening 110C, designed to define a recess for a tightening tool (manoeuvring wrench), as will be better illustrated in what follows. The circumferential wall 110A is radiused at the bottom with a bottom annular wall 110D defining one or more teeth 12 projecting radially inwards (just one of which is visible in Figure 7) corresponding in number to the notches 84 of the annular end edge 82 of the outer reinforcement 8 of the elastic support 4.

The coating made of elastomeric material 111 coats completely the outer surface of the walls 110A, 110B and 110D of the metal structure 110 of the safety member 11. In particular, the coating made of elastomeric material 111 comprises a top wall 111A that covers and closes the top wall 110B of the metal structure 110 completely. The top wall 111A of the coating made of elastomeric material 111 has at the centre a depressed portion 111B that coats the walls of the recess for the tightening tool and defines a blind bottom 111C. In this way, the cavity inside the safety member 11 and the reinforcement 8 of the elastic support is completely closed in a fluid-tight way so as to protect the stem of the shock absorber from external agents and also obtain a reduction of the noise of the assembly.

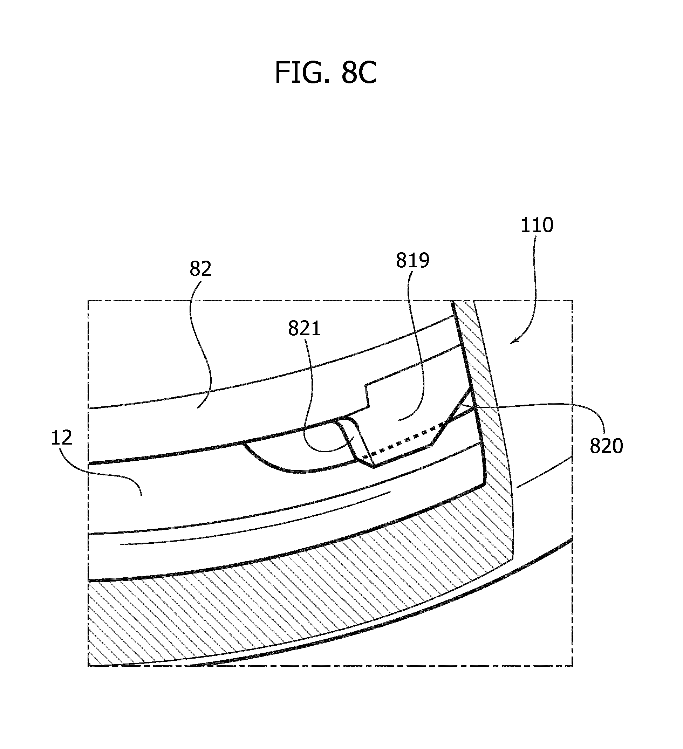

The installation of the safety member 11 is performed by laying, in a first step, the safety member on the dome-shaped portion 2 of the body of the motor vehicle, taking care to position the two teeth 12 within the corresponding notches 84 of the annular end edge 82 of the reinforcement 8 (see Figure 7B). Starting from said condition, clamping of the safety member in the mounted condition is obtained by imparting a rotation of approximately 90° on the safety member 11 about its axis 5a, in one direction or in the other. As may be seen in Figure 7, the surface of engagement of the annular end edge 82 has, on each side of each notch 84, a tooth 819 projecting axially, having its side facing the notch 84 defining an inclined lead-in surface 820 for engagement of the respective tooth 12. Said condition is visible in particular in Figure 3; one of the lead-in surfaces 820 is illustrated at an enlarged scale in Figure 7A. The opposite side of each axial tooth 819 is defined by a substantially axial surface 821 (see also Figure 8C). Each pair of surfaces 821 facing one another thus delimits a seat in which a tooth 12 is received and withheld after rotation for tightening of the safety member 11.

In the tightened condition illustrated in Figure 3, a first outer annular portion 13 of the bottom part of the coating made of elastomeric material is axially compressed between the bottom wall of the safety member 11 and the top surface of the dome-shaped portion 2 so as to function as anti-slip member for the safety member 11. The bottom part of the coating made of elastomeric material 111 also comprises a second annular portion 14, inside the first annular portion 13, which rests against the top wall 80 of the reinforcement 8, being received within the top opening 2a of the dome-shaped portion 2.

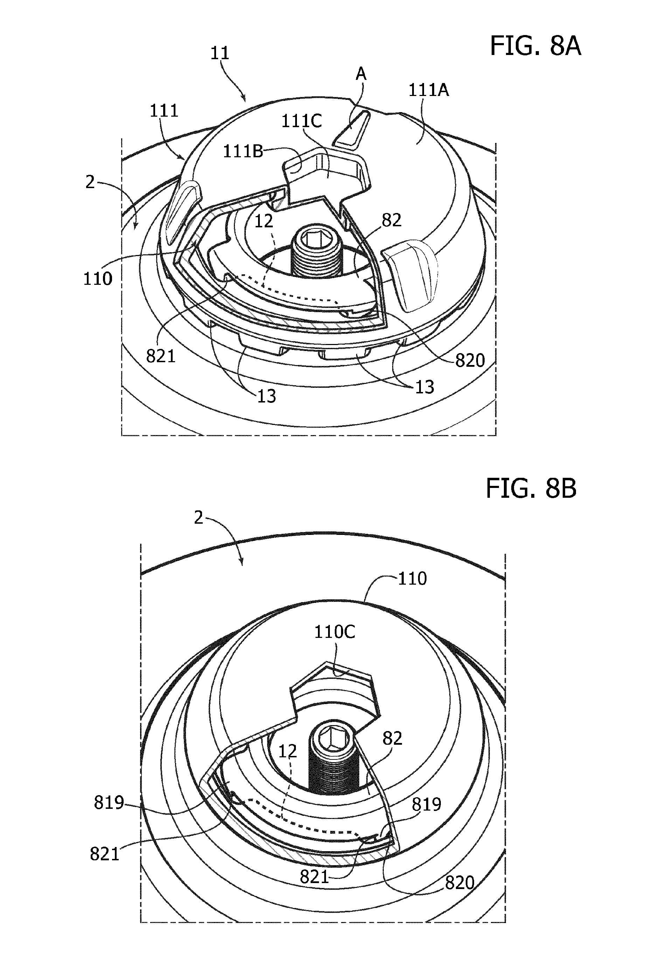

At the moment of installation, the safety member 11 is rested with the portion made of elastomeric material 14 in contact with the wall 80 and, as already mentioned, with the teeth 12 positioned within the notches 84. Correct angular positioning is facilitated in so far as provided on the top wall 111A of the coating made of elastomeric material are one or more reference marks of the type for example as the one designated by A in Figure 7. Once the member 11 has been rested in the position described above, it is rotated through 90°, in one direction or the other, by means of engagement of a manoeuvring wrench within the slot 111B. As already described, in the tightened condition the teeth 12, after having engaged the corresponding lead-in surfaces 820 of the respective teeth 819, extend beyond the latter, reaching the seats defined between the surfaces 821 of two consecutive teeth 819. In said condition, there is an axial compression of the annular portion 13 made of elastomeric material between the bottom wall 110D of the safety member and the top surface of the dome-shaped portion 2, as well as an axial compression of the further annular portion 14 between the aforesaid bottom surface 110D and the top wall 80 of the reinforcement 8 of the elastic support. Figures 8A, 8B refer to the position of the safety member in the tightened condition.

Dismantling of the latter can be performed by causing the safety member 11 to perform a reverse rotation, after having exerted an axial compression, allowed by the deformability of the elastomeric material, sufficient to cause the teeth 12 to come out of the seats defined between the surfaces 821.

Figure 8C shows the detail of one of the teeth 819, which project from the annular end edge 82 and each have one side defining the inclined surface 820 and the opposite side defining the radial arrest surface 821, for withholding the safety member in the installed condition.

As is evident from the foregoing description, the safety device according to the invention is characterized by its constructional simplicity and above all for the ease and rapidity of use. Thanks to the provision of the coating made of elastomeric material provided in the way described above, the device also enables fluid-tight closing of the cavity in which the stem of the shock absorber is set in a simple and fast way, also enabling a considerable reduction of the noise perceived.

Of course, without prejudice to the principle of the invention, the details of construction and the embodiments may vary widely with respect to what is described and illustrated herein purely by way of example, without thereby departing from the scope of the present invention.

## Claims

1. A safety device designed to withhold the elastic support (4) associated to the top end of the stem (5) of a shock absorber in the corresponding seat (2) of the body of a motor vehicle, wherein:
- said seat is in the form of a dome-shaped portion of sheet metal (2), with a top opening (2a);
- said elastic support (4) comprises a body made of elastomeric material (6) set between an inner reinforcement (7) connected to said stem (5) and an outer reinforcement (8) resting against the bottom surface of said dome-shaped portion (2) of the body;
- said device comprises a safety member (11) of the circular-plug or circular-cap type, resting on the top surface of the dome-shaped portion (2) of the body and designed to engage said outer reinforcement (8) following upon a rotation about its axis (5a) so as to withhold said outer reinforcement (8) against the bottom surface of said dome-shaped portion (2); and
- said safety member (11) comprises a metal structure (110) provided with a coating made of elastomeric material (111), which in the tightened condition of the safety member (11) is axially compressed between the top surface of the dome-shaped portion (2) and the metal structure (110) of the safety member (11),
said device being **characterized in that**:
- the metal structure (110) of said safety member (11) comprises a circumferential wall (110A) radiused at the bottom with a bottom annular wall (110D), having one or more teeth (12) projecting radially inwards, said circumferential wall (110A) being radiused at the top with a top wall (110B) having a central hole (110C) shaped to form an engagement slot for a manoeuvring wrench;
- said coating made of elastomeric material (111) covers entirely the outer surface of said circumferential wall (110A), of said top wall (110B), and of said bottom annular wall (110D) and coats said engagement slot of the manoeuvring wrench to define a blind bottom (111C) for said cavity;
- said outer reinforcement (8) has the top end (81) projecting through said central opening (2a) above said dome-shaped portion (2), and having an annular end edge (82) projecting radially outwards;
- the aforesaid teeth (12) of the safety member (11) are designed to be received initially within corresponding notches (84) of said annular end edge (82) of said outer reinforcement (8) and to engage subsequently within bottom seats (821) of said annular end edge (82) following upon a rotation of the safety member (11) about its axis; and
- in said rotated condition of the safety member, the aforesaid coating made of elastomeric material (111) has at the bottom a first outer annular portion (13) axially compressed between the bottom wall (110D) of the metal structure (110) of the safety member (11) and the top surface of the dome-shaped portion (2) of the body, and a second more external annular portion (14) received within said top opening (2a) of the dome-shaped portion (2) and pressed against a top wall (80) of said outer reinforcement (8).

2. The safety device according to Claim 1, **characterized in that** the aforesaid notches (84) are each defined between two teeth (819) projecting axially from said annular end edge (82), each of said axial teeth (819) having an inclined side (820), facing the respective notch (84), constituting a lead-in for proper engagement of a respective radial tooth (12) of the safety member (11) following upon the aforesaid rotation, the other side (821) of each axial tooth (819) being a substantially axial surface that delimits on one side a seat for withholding the respective radial tooth (12) following upon the manoeuvre of rotation of the safety member.

3. The safety device according to Claim 1, **characterized in that** the coating made of elastomeric material (111) bears at least one reference (A) for correct angular positioning of the safety member.
